# EUROPEAN PATENT APPLICATION

(11) **EP 3 216 682 A1**
(43) Date of publication of application: **13.09.2017**
(21) Application number: 17160449.9
(22) Date of filing: 10.03.2017
(51) Int. Cl.: B62H 3/08

(54) **DEVICE FOR STORING A BICYCLE**

(30) Priority: 10.03.2016 NL 2016415
(71) Applicant: VelopA B.V., 2351 AX Leiderdorp (NL)
(72) Inventor: Withagen, Feiko Sjoerd, 2351 AX Leiderdorp (NL)
(74) Representative: V.O.

(57) **Abstract**

In summary, a device is disclosed for storing bicycles which comprises a frame to which a storage platform is swivellably mounted and which storage platform is movable between a lower loading or parking position for loading a bicycle on or off the storage platform and an upper holding or storage position. A biasing element like for example a gas spring is provided for biasing the storage platform to the holding or storage position. The biasing element is connected to the frame and the storage platform such that over a first part of the trajectory from the upper storage position to the lower parking position, the storage platform is biased to the upper storage position and over a second part of the trajectory from the upper storage position to the lower parking position, the storage platform is biased to the lower parking position. The upper storage position is part of the first part of the trajectory.

## Description

### TECHNICAL FIELD

The general aspect and embodiments thereof relate to the field of storage devices for bicycles.

### BACKGROUND

Storage devices for bicycles in general are well known. They mostly comprise at least one gutter element placed on the ground for holding at least one wheel of the bicycle. As space around e.g. railway stations is limited, bicycle storage constructions are available for storing bicycles at two or more levels. A gutter at an upper level may be accessible by swivelling the gutter downward, combined with a sliding downward movement of the gutter. The gutter may be biased towards the upward position, to ease efforts required by a person storing the bicycle. Such storage constructions are for example known from patent publications NL1011598C2 and NL2006094C. These documents disclose such constructions, with elastic elements for providing a biasing force, which elastic elements are provided under the storage platforms.

### SUMMARY

It is preferred to provide a device or construction for storing bicycles at a level above the ground that provides more room underneath the storage platform in order to facilitate more convenient parking of a bicycle under the upper storage platform. For the avoidance of doubt, such bicycles may be human powered bicycles, machine driven bicycles, hybrid bicycles, other, or a combination thereof. The machine driven bicycles may be powered by means of an electrical motor, a combustion engine or another power source.

A device is provided for storing a bicycle. The device comprises a frame for supporting the device and a storage platform. The storage platform is connected to the frame over a swivelling connection having a swivelling axis, allowing the storage platform to be moved between a storage position for storing the bicycle and a parking position for receiving the bicycle, the storage position being higher than the parking position. The storage platform is comprises a wheel gutter on which a bicycle can be placed. Such a wheel gutter is typically translatable with respect to the storage platform, such that in the storage position, the wheel gutter can be translated to a retracted position in which the wheel gutter is substantially above the frame. In the parking position of the storage platform, the wheel gutter can be translated with respect to the storage platform to an extended position in which the wheel gutter substantially extends out of the storage platform, such that, in parking position, the wheel gutter extends towards the ground to more easily receive a bicycle. The storage position can be an approximately horizontal position to store the bicycle upward, the parking position can be a slanting position in which the storage platform is substantially obliquely oriented to allow a bicycle to be driven from e.g. the ground onto the storage platform.

The device further comprises a biasing element connected to the frame at a proximal end of the biasing element and connected to the storage platform at a distal end of the biasing element, the biasing element being arranged for providing a biasing force for biasing the storage platform to the storage position. The biasing element is connected to the frame and the storage platform such that over a first trajectory of the movement of the storage platform from the storage position to the parking position the storage platform is biased to the storage position, over a second trajectory of the movement of the storage platform from the storage position to the parking position the storage platform is biased to the parking position and in the parking position, the storage platform is biased to the parking position.

This construction enables convenient storage of bicycles, without undue effort and burden for a cyclist for moving the storage platform from the parking position to the storage position and back. As such, the user can conveniently move the storage platform between the storage position and the parking position. From the storage position to the parking position, the user first needs to push the storage platform against the biasing force downward over the first trajectory, until a dead point is reached. Then, over the second trajectory, the biasing element helps the user to further move the storage platform to the parking position. When moving the storage platform from the parking position to the storage position, the user first has to push the storage platform upwards against the biasing force over the second trajectory, until the dead point is reached, after which the biasing element, in the first trajectory, helps the user to move the storage platform towards the storage position. Advantageously, the first trajectory is longer than the second trajectory, such that the user is "helped" more to move the storage platform loaded with a bicycle from the parking position to the storage position. Advantageously, an angle Alpha of the biasing element with respect to the storage platform in the storage position is smaller than 10 degrees. More advantageously, an angle Beta of the biasing element with respect to the storage platform in the parking position can be smaller than 5 degrees, preferably smaller than 3 degrees. These small angles alpha and beta in the storage position as well as in the parking position can provide a very compact device.

The frame further comprises a support abutment and the storage platform comprises a platform abutment such that in the parking position, the support abutment abuts to the platform abutment. By providing such support abutment and platform abutment abutting against each other in the parking position, the parking position is defined. The user can simply drop the support platform with wheel gutter in the second trajectory, when moving the support platform from the storing position to the parking position, and the support platform is stopped in the parking position by the abutment of the platform abutment to the support abutment.

In an embodiment of the device, the biasing element is connected to the frame and to the storage platform at the same side of the swivelling axis, as seen in a direction along the swivelling axis, determined from a line perpendicular to the storage platform in storage position. Alternatively, the biasing element can be connected to the frame at a first side of the swivelling axis, as seen in a direction along the swivelling axis, determined from a line perpendicular to the storage platform or at the line perpendicular to the storage platform; and the biasing element can be connected to the storage platform at a second side of the swivelling axis, the second side being opposite to the first side, determined from the line perpendicular to the storage platform. The first side of the swivelling axis, as seen in a side view of the storage device, so in a direction along the swivelling axis, is the side comprising the largest part of the frame, whereas the second side opposite the first side, is the side of the storage device from which bicycles can be loaded on and off the storage device. This embodiment enables convenient design of the construction. More in particular, this embodiment allows for a compact design of the construction. Regulations prescribe bicycles having a steer height of 121 centimetres are to be accommodated at an upper level and at a lower level of the construction. This embodiment allows for manufacturing of a construction complying with this regulation that may be placed in a room having a ceiling of approximately 275 centimetres. Thus a very compact design can be obtained.

In a further embodiment, a first length between a mounting position of the proximal end of the biasing element to the frame and the swivelling axis is smaller than a second length between the mounting position of the distal end of the biasing element and the swivelling axis.

With the biasing element placed away from the frame towards the storage platform, more room is provided under the storage platform for parking a bicycle.

The storage platform in the storage position is advantageously in a substantially horizontal position, and in the parking position the storage platform is in a downwardly slanting position and the biasing element comprises an elongated body which is substantially parallel to the storage platform throughout the movement of the storage platform from the storage position to the parking position and throughout the movement of the storage platform from the parking position to the storage position.

With the biasing element being substantially parallel relative to the storage platform, it can be mounted at the lower side of the storage platform without extending too much from a lower side of the storage platform. This creates more room for conveniently storing another bicycle under the storage platform.

Further, the frame may comprise a frame arm through which the swivelling axis extends and the storage platform comprises a platform arm through which the swivelling axis extends and the biasing element is placed under an angle relative to the platform arm and is at a point between the first trajectory and the second trajectory approximately parallel to the platform arm. At the point in which the biasing element is parallel to the platform arm, the dead point between the first trajectory and the second trajectory is reached. This may provide for convenient design options and may ensure biasing towards a position if the storage platform is in that particular position. Furthermore, it allows for compact design.

The frame may comprise a frame arm through which the swivelling axis extends and the storage platform may comprise a platform arm through which the swivelling axis extends and the proximal end of the biasing element is connected to the frame at a first distance from the frame arm and the distal end of the biasing element is connected to the storage platform at a second distance from the platform arm. This enables convenient and compact design of the construction.

### BRIEF DESCRIPTION OF THE DRAWINGS

The general aspect and embodiments thereof will now be discussed in further detail in conjunction with drawings. In the drawings,
- Figure 1:: shows a device for storing a bicycle, with storage platforms in the storage positions;
- Figure 2:: shows a detail of the device for storing a bicycle, with storage platforms in the storage positions;
- Figure 3:: shows the device in perspective;
- Figure 4:: shows the device for storing a bicycle, with storage platforms in the parking positions; and
- Figure 5:: shows a detail of the device for storing a bicycle, with storage platforms in the parking positions.

### DETAILED DESCRIPTION

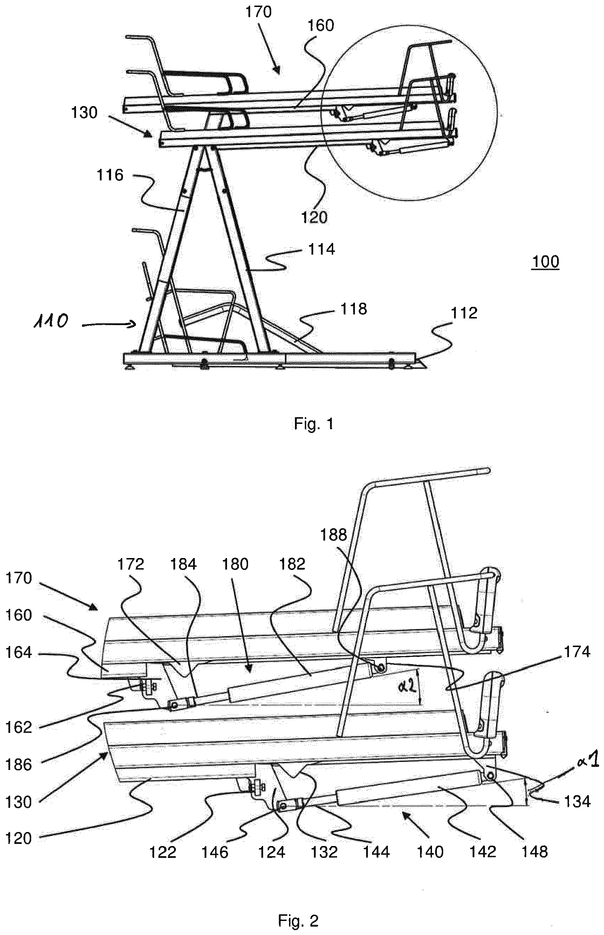

Figure 1 discloses a bicycle stand device 100. The bicycle stand device 100 comprises a support frame 110 comprising a frame foundation 112, a first upright frame part 114 and a second upright frame part 116 for supporting a first platform support 120 and a second platform support 160. The first upright frame part 114 and the second upright frame part 116 are in this embodiment arranged in a triangle, with the tops of the first upright frame part 114 and the second upright frame part 116 meeting at the first platform support 120. Alternatively, only one upright frame part may be provided. Also the first upright frame part 114 and the second upright frame part 116 may be provided in a substantially vertical configuration.

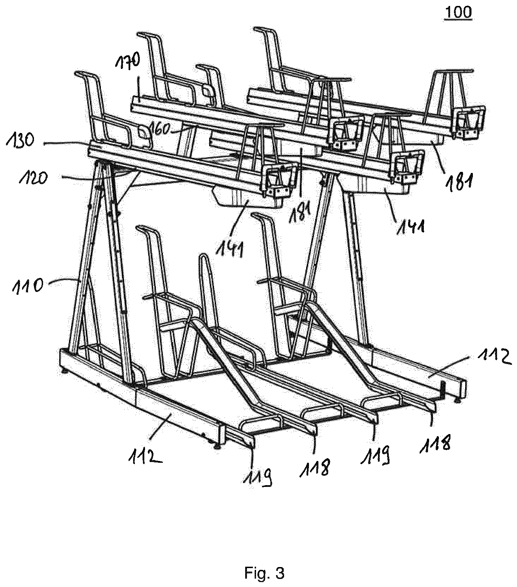

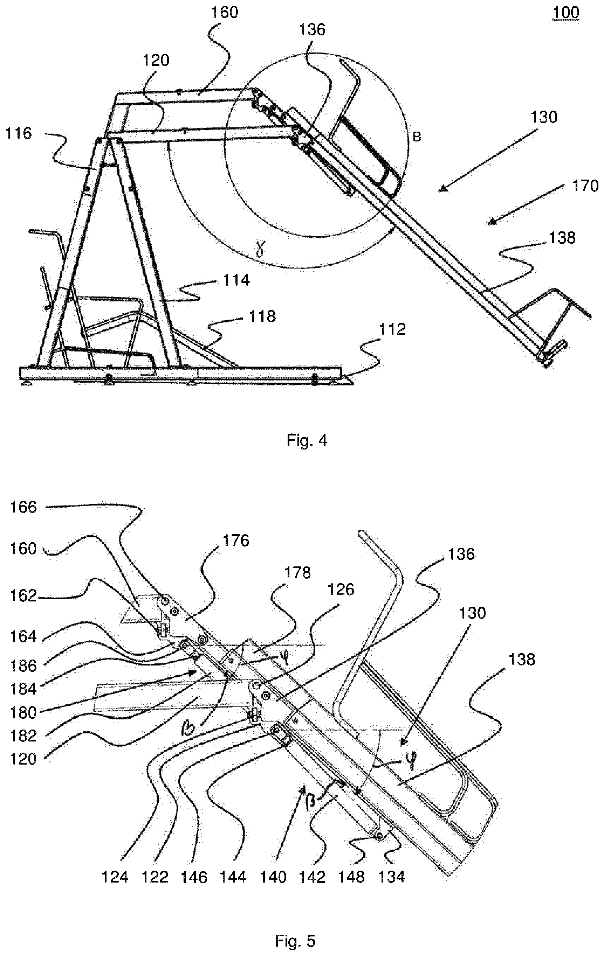

On the first platform support 120, a first storage platform 130 is provided for storing a bicycle. On the second platform support 160, a second storage platform 170 is provided for storing a bicycle. To the frame foundation 112, a third storage platform 118 is provided for storing a bicycle, and a fourth storage platform 119 is provided for storing a bicycle. In one embodiment, the first storage platform 130 and the second storage platform 170 may be substantially identical, except for the point that the second storage platform 170 is positioned higher than the first storage platform 130. Also embodiments of a structure comprising a single storage platform may be envisaged. The third and the fourth storage platform 118, 119 are stationary storage platforms arranged near the ground to receive a bicycle. A bicycle can be driven onto the third or fourth storage platform directly from the ground and bicycles can be stored at the ground level. To provide for a more compact storage of the bicycles, one of the third and fourth storage platform is at an end thereof higher than the other one, as can be seen in figure 3. The first and second storage platforms 130, 170 are elevated to store bicycles at a level above the ground level. Also here, to provide for a more dense storage of bicycles, one of the first and second storage platforms is higher than the other one to avoid steers of adjacent bicycles to abut against each other. The upper storage platforms 130, 170 usually comprise a wheel gutter in which the bicycle can be stored. Here, the storage platforms 130, 170 are shown in the storage position, which is substantially horizontal and in which the bicycle can be stored. The storage platform 130, 170 is also adjustable to a parking position, as shown in figures 4 and 5 in which the storage platform has a substantially oblique orientation such that the bicycle can be moved onto the wheel gutter of the storage platform.

Figure 2 shows a detail of the bicycle stand device 100 that is in Figure 1 indicated in the circle A. Figure 2 shows the first platform support 120 and the second platform support 160. The first platform support 120 and the second platform support 160 are fixedly mounted to the frame 110. On the first platform support 120, the first storage platform 130 is provided. In this embodiment the first storage platform 130 comprises a wheel gutter for accommodating wheels of a bicycle. Alternatively, two separate wheel gutter elements may be provided on the first storage platform 130, one for each wheel. Also other types of holding elements for holding a bicycle may be provided on the first storage platform 130. Likewise, the second storage platform 170 is provided with at least one bicycle holding element, like for example a wheel gutter. Also vertically oriented bicycle support modules may be used, for supporting a front wheel, a rear wheel, a bicycle frame, another part of the bicycle or a combination thereof.

The first platform support 120 is connected to the first storage platform 130 via a first biasing element 140. The biasing element is in this embodiment a gas spring, but, alternatively or additionally, other biasing elements may be provided, like a helical spring, liquid springs, other, or a combination thereof. The first biasing element 140 exerts a biasing force, i.e. a first plunger 144 is urged to an extended position relative to a first cylinder 142. The first gas spring 140 is connected to the first platform support 120 via a first mounting point 146 and a first support extension 124.

On the first support extension 124, a first support abutment 122 is provided. The first support abutment 122 comprises for example a threaded screw, bolt or other device. By means of this screw, an exact position of the first support abutment 122 may be defined. On the first storage platform 130, a first platform abutment 132 is provided as a cam. The first biasing element 140 is connected to the first storage platform 130 via a second mounting point 148 and a first platform extension 134. The positions of the first platform abutment 132 and the first support abutment 122 define a parking position as will be discussed below. The first storage platform 130 and the first platform support 120 also may provide a further support abutment and a further platform abutment that engage for defining the storage position. In the storage position, the further support abutment and the further platform abutment abut. This abutting prevents the first storage platform 130 from moving counter-clockwise, as seen in the side view of figure 2, over a swivelling axis by virtue of the force provided by the biasing element 140.

The first biasing element 140 of the first storage platform 130 and the second biasing element 180 of the second storage platform 170 are at a proximal end mounted to the frame 110, in particular to the first platform support 120 and the second platform support 160 respectively. The opposite, distal end of the biasing element 140, 180 is connected to the movable storage platform 130, 170 respectively. Preferably, the biasing element 140, 180 is mounted to an end of the platform support 120, 160 respectively. For example, a support extension 124, 164 can be used respectively to mount the biasing element 140, 180 to the respective platform support 120, 160. By using such a support extension 124, 164 a mounting point 146, 186 of the respective biasing element 140, 180 can be positioned lower than the respective platform support 120, 160. The support extension 124, 126 can also be embodied to provide that the mounting point 146, 186 is lower than the respective support abutment 122, 162. For example, by using a differently shaped support extension, tuning of an angle of the biasing element 140, 180 with respect to the storage platform 130, 170 can be possible.

As such, the biasing element 140, 180 is arranged substantially below the storage platform 130, 170 which is advantageous for providing the biasing force. Also, the biasing element 140, 180 will then make a relatively large angular displacement between the storage position and the parking position as it follows the movement of the storage platform 130, 170 respectively.

Advantageously, the biasing element 140, 180 is oriented substantially parallel to the storage platform 130, 170 respectively, the angle alpha of the biasing element 140, 180 with respect to the storage platform 130, 170 is relatively small. Preferably, the angle alpha is smaller than 10 degrees. Mounting the biasing element with a relatively small angle below the storage platform, allows for a compact configuration providing sufficient space for bicycles to be positioned underneath. Also, mounting the biasing element substantially below the storage platform and with a relatively small angle, provides for sufficient biasing force for the user.

The angle Alpha of the biasing element 140, 180 with respect to the storage platform 130, 170 is smaller than approximately 15 degrees, preferably smaller than approximately 10 degrees, preferably between approximately 10 degrees and approximately 5 degrees. The angle Alpha1 of the first biasing element 140 and the angle Alpha2 of the second biasing element 180 can be, but need not be, different, in view of a possible different angular displacement of the respective storage platforms 130, 170 between the storage position and the parking position.

In this embodiment, for example, the first biasing element 140 is placed under an angle Alpha 1 of approximately 8 degrees relative to the first storage platform 130 in the storage position. This angle preferably does not exceed 15 degrees for other embodiments. Within the context of this description, an angle of 15 degrees or less between the first gas spring 140 and the first storage platform 130 is considered to be a state in which the first gas spring 140 is substantially parallel to the first platform 130. Alternatively, this limit may be provided at approximately 12 degrees or even approximately 10 degrees. It is to be understood that the configuration of the biasing element, and thus the angle Alpha1, may be dependent of various parameters, such as maximum allowable weight, angular displacement, height etc.

The second platform support 160 is connected to the second storage platform 170 via a second biasing element 180, which can be embodied as a gas spring. Alternatively or additionally, other biasing elements may be provided, like a helical spring, liquid springs, other, or a combination thereof. The second biasing element 180 exerts a compressive force, i.e. a second plunger 184 is pushed out of a second cylinder 182. The second gas spring 180 is connected to the second platform support 160 via third mounting point 186 and a support extension 164. On the second support extension 164, a second support abutment 162 is provided. On the second storage platform 170, a second platform abutment 172 is provided. The second biasing element 180 is connected to the second storage platform 170 via a fourth mounting point 188 and a second platform extension 174.

In this embodiment, the second gas spring 180 is placed under an angle Alpha2 of approximately 6 degrees relative to the second storage platform 170 in the storage position. This angle Alpha2 preferably does not exceed 15 degrees for other embodiments, the angle Alpha2 is preferably smaller than approximately 10 degrees and may more preferably between approximately 10 degrees and approximately 5 degrees. Within the context of this description, an angle of 15 degrees or less between the second gas spring 180 and the second storage platform 170 is considered to be a state in which the second gas spring 180 is substantially parallel to the second platform 170. Alternatively, this limit may be provided at 12 degrees or even 10 degrees or 8 degrees.

Figure 3 shows a perspective view of the bicycle stand device 100 having a frame 110 on which upper storage platforms 130, 170 are adjustably mounted. The lower storage platforms 118, 119 are stationarily mounted to the frame 110. The lower storage platforms 118, 119 comprise a first lower storage platform 118, which is arranged to hold a first wheel of a bicycle at a higher level than a second wheel of said bicycle. The first lower storage platform 118 is placed alternatingly with a second lower storage platform 119, which is arranged for holding a bicycle horizontally. The upper storage platforms 130, 170 are all placed substantially in parallel with ground level, but alternatingly at different heights with respect to the lower storage platforms 118, 119. Preferably, a first lower storage platform 118 is located under a upper storage platform located higher than a neighbouring upper storage platform. The upper storage platforms 130, 170 are arranged to hold wheels of a bicycle in a substantially horizontal way. The biasing elements 140, 180 are at one end connected to the frame 110, and at an opposite end connected to the storage platforms, such that the opposite end moves together with the storage platform during adjustment between the storage position and the parking position. In this embodiment, the biasing elements 140, 180 are covered by a casing 141, 181 respectively. As such, the biasing element 140, 180 is protected from environmental influences such as rain and wind, but also is protected from dirt and/or dust, as well is protected against tampering. Due to the compact arrangement of the biasing element below the storage platform and with a relatively small angle, the casing 141, 181 can become relatively small and compact reducing or even minimizing hindrance to the users.

Figure 4 shows the bicycle stand device 100 with the first storage platform 130 and the second storage platform 170 in a lower position for receiving a bicycle; both the first storage platform 130 and the second storage platform 170 are in a parking position. The positions of the first storage platform 130 and the second storage platform 170 depicted in Figure 1 and Figure 2 are the storage positions. The parking position is in this embodiment considered to be lower than the storage position, with the first storage platform 130 and the second storage platform 170 in downwardly slanted positions. The storage platforms 130, 170 are adjustable between the storage position and the parking position by pivoting the storage platforms 130, 170 around a swivelling axis126, 166 respectively, as shown in figure 5. The angular displacement of the storage platform 130, 170 is approximately 45 degrees, but can be larger or smaller, depending on the particular configuration. The supplementary angle gamma (γ) between the platform support 120, 160 and the support platform 130, 170 in the parking position is therefore approximately 135 degrees.

The parking position is in this embodiment defined by a position of the first support abutment 122 and a position of the first platform abutment 132. In the parking position, the first support abutment 122 abuts to the first platform abutment 132. As indicated above, the first storage platform 130 and the second storage platform 170 are biased towards the storage positions by the first biasing element 140 and the second biasing element 180, respectively, over a first trajectory of the adjustment between the storage position and the parking position. At a certain point during the adjustment, the dead point of the biasing element 140, 180 is reached, in which the biasing element is substantially parallel to the storage platform. Then, the biasing element has no working arm with respect to the storage platform, and there is a dead point. Upon further adjustment, the storage platform is pushed through the dead point, i.e. the second trajectory, and now the working arm of the biasing element is reversed and the biasing element biases the storage platform towards the parking position. Other embodiments may be envisaged in which this is the case. In any embodiment, an optional locking module may be provided for locking the first storage platform 130 and/or the second storage platform 170 in their respective parking position.

Figure 4 also shows the first storage platform 130 to comprise a first bicycle holding module 138 that is translatable, e.g. slidably, mounted on a first storage support 136. Alternatively, the first bicycle holding module 138 is rigidly mounted to the first storage support 136 or both are provided in one and the same body. the second storage platform 170 may be embodied in an equivalent way.

Figure 5 shows a detail of Figure 4 as indicated in the circle B. Figure 5 shows a first swivelling axis 126 over which the first storage platform 130 can pivot relative to the first platform support 120 between the storage position and the parking position. Figure 5 furthermore shows the first platform abutment 132 to abut against the first support abutment 122. The positions of the first swivelling axis 126, the first platform abutment 132 and the first support abutment 122 relative to one another define the parking position of the first storage platform 130. The parking position of the second storage platform 170 is defined in an equivalent way.

In the embodiment shown by Figure 5, the first support abutment 122 is provided such that the first storage support 136 from which the platform abutment 132 protrudes, overlaps with a part of the first platform support 120 to which the first support abutment 122 connected. Hence, the first storage support 136 does not abut against the first platform support 120, but rather to the first support abutment 122 connected thereto. This allows choice of placement of the first support abutment 122 relative to the first platform support 120 on one hand. On the other hand, it allows a certain freedom of choice of design of shape of the first platform support 120. Likewise, this applies to the first storage support 136 and the platform abutment 132.

In the parking position of the first storage platform 130, the first biasing element 140, the first gas spring 140, in particular the first cylinder 142 is at an angle Beta1 relative to the first storage platform 130. The angle Beta1 is approximately 3 degrees. Due to the dead point through which the biasing element 140 has gone during adjustment, the orientation of the biasing element is now different than in the storage position, such that the angle Beta is a different angle than the angle Alpha in the storage position. If the storage platform 130 is adjusted over an angle phi, here approximately 45 degrees, from the storage position to the parking position, the angle of the biasing element then becomes approximately Phi+Beta, with respect to a horizontal when the storage position is considered horizontal. As such, the angle of the biasing element has a different sign than the angle of the first biasing element 140 relative to the first storage platform 130 in the storage position. This means that in the trajectory of the first storage platform 130 from the storage position to the parking position - and back - this angle reaches zero. In other words, throughout this trajectory, the first gas spring 140 is at one position along the trajectory parallel to the first storage platform. This means during the a first section of the trajectory, the first gas spring 140 biases the first storage platform 130 to the storage position. And during a second section of the trajectory, the first gas spring 140 biases the first storage platform 130 to the parking position. The parking position is at an end of the second partial trajectory. At a point between the first partial trajectory and the second partial trajectory, the angle between the first cylinder 142 and the first storage platform 130 reaches zero. This is called a dead point in the total trajectory.

More in particular, the angle Beta1 between the first storage platform 130 and the first biasing element 140 is in the parking position approximately 3 degrees. In other embodiments, this angle may be approximately 0,5 degrees, 1 degree, 2 degrees, 3 degrees, 4 degrees or in a range between any of these number.

And the angle Beta2 between the second storage platform 170 and the second gas spring 180 is in the parking position approximately 0 degrees, for example approximately 0,4 degrees, or approximately 0,5 degrees. In other embodiments, this angle may be approximately 0,3 degrees, 0,5 degrees, 1 degree, 2 degrees, 3 degrees, 4 degrees or in a range between any of these numbers.

The position of the first gas spring 140 relative to the first storage platform 130 may be configured by selecting the positions of the first swivelling axis 126, the first mounting point 146 and the second mounting point 148 relative to one another. In this way, the dead point in the trajectory may be defined, by changing these positions relative to one another, as discussed below in detail. In the embodiment shown by Figure 5, the effect of the biasing element providing biasing forces in the different directions over the trajectory as discussed, is achieved through various features. These features do not necessarily have to be used all in conjunction with one another and some may be omitted or be configured differently for yet achieving the same effect.

First, the first biasing element 140 is mounted such that it is fully mounted under the first storage platform 130, rather than under the first platform support 120. This means that the first biasing element 140 is fully mounted at one side of a line perpendicular to the first storage platform 130 through the swivelling axis 126 when the storage platform 130 is in storage position and as seen along the swivelling axis as in the view of figure 2. As such, the first biasing element 140, and in this embodiment also the second biasing element 180, are positioned approximately completely below their respective storage platform 130, 170. The proximal end as well as the distal end of the biasing element are thus below the support platform when the support platform is in storage position, and, advantageously, when the support platform is in parking position. By positioning the biasing element below the support platform and at one side of the swivelling axis, a compact configuration and relative small angle of the biasing element can be obtained. Second, a distance between the first mounting point 146 and the line perpendicular to the first storage platform 130 through the swivelling axis 126, when the storage platform 130 is in storage position and as seen in a view according to figure 2, is smaller than the distance between the second mounting point 148 and that same line. In the embodiment disclosed by Figure 5, the distance between the first mounting point 146 and a line perpendicular to the first storage platform 130 through the swivelling axis 126, when the storage platform 130 is in storage position and as seen in a view according to figure 2 or figure 5, is relatively small.

Alternatively, the first mounting point 146 and the second mounting point 148 may be opposite of the line perpendicular to the first storage platform 130 through the swivelling axis 126, when the storage platform 130 is in storage position and as seen in a view according to figure 2 or on the same side. The mounting point of the proximal end of the biasing element is thus relatively close to the swivelling axis, and the distal end of the biasing element is further away from the swivelling axis mounted to the support platform such that the biasing element substantially extends below the support platform.

Tuning or adjustment of the angular position, indicated by angle Alpha, of the biasing element 140, 180 can be done by providing different extensions, in particular by the lengths of the first support extension 124 and the first platform extension 134 measured perpendicularly to the platform support 120 or the storage platform 130 respectively. In the embodiment shown by Figure 5, the first support extension 124 is longer than the first platform extension 134. This enables the first biasing element 140 to be mounted to a (virtual) frame arm of the first platform support 120 at first distance from the first platform support 120, and to a (virtual) arm of the first storage platform 130 at a second distance from the first storage platform 130. In this embodiment, the first distance is larger than the second distance. Thus, the proximal end of the biasing element is lower than the distal end of the biasing element with respect to the platform support in storage position.

Providing multiple configurations for mounting the biasing element 140 to the first platform support 120 and the first storage platform 130, allows adjustment of the angular position of the biasing element with respect to the platform support, while still providing the largest part of or the entire biasing element 140 under the first storage platform 130 and substantially parallel to the first support platform 130 throughout the trajectory from the storage position to the parking position.

Adjustment of the angular position of the biasing element can also be provided by adjusting the position of the first support abutment 122 and the first platform abutment 132. For example, the first support abutment can be embodied as a screw or other adjustable element. For convenient use of the bicycle stand device 100, the dead point is preferably very close to the parking position. The parking position is defined as the end of the movement trajectory, in particular the second trajectory, of the first support platform 130, which end may be defined by positions of the first support abutment 122 and the first platform abutment 132. The dead point is in fact determined by the angular position of the biasing element with respect to the storage platform, in storage position, and adjustment thereof can be done by adjusting the mounting position of the proximal and/or distal end of the biasing element. The parking position is defined by the abutment of the platform abutment and the support abutment, and adjustment thereof can be done by, preferably, adjusting the platform abutment.

By providing the first support abutment 122 and the first platform abutment 132 separately from the dimensions of the first support extension 124 and the first platform extension 134, the dead point and the parking position may be defined independently from one another. This enables optimisation of the position of the first biasing element 140 relative to the first support platform 130. More in particular, this allows for design of the bicycle stand device 100 such that the first biasing element 140 is placed towards the first support platform 130 as close as possible - without compromising any further functionality of the bicycle stand device 100. This, in turn, allows for compact design of the bicycle stand 100, while still complying with regulations as mentioned above.

The swivelling connection between the second platform support 160 and the second storage platform 170 is preferably configured in equivalent ways.

In summary, a construction is disclosed for storing bicycles, which construction comprises a frame to which a storage platform is pivotably mounted, and which storage platform is movable between a lower loading or parking position for loading a bicycle on or off the storage platform and an upper holding or storage position. The storage platform comprises a bicycle holding unit like a wheel gutter for holding the bicycle. The wheel gutter may be translatably, for example slidably, mounted in the storage module. A biasing element like for example a gas spring is provided for biasing the storage platform to the holding or storage position. The biasing element is connected to the frame and the storage platform such that over a first part of the trajectory from the upper storage position to the lower parking position, the storage platform is biased to the upper storage position and over a second part of the trajectory from the upper storage position to the lower parking position, the storage platform is biased to the lower parking position. The upper storage position is part of the first part of the trajectory and the lower parking position is part of the second part of the trajectory. This allows the biasing element to be substantially, but not fully, parallel to the storage platform throughout the major part of the trajectory from the lower parking to the upper storage position, with the biasing element passing through a point in which it is parallel to the storage platform. It allows placement of the biasing element close to the storage platform, leading to a very compact design which can provide a lot of room under the storage platform for storing bicycles.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in being a reference to the plural and vice versa.

In the description above, it will be understood that when an element such as layer, region or substrate is referred to as being "on" or "onto" another element, the element is either directly on the other element, or intervening elements may also be present.

Furthermore, the invention may also be embodied with fewer components than provided in the embodiments described here, wherein one component carries out multiple functions. Just as well may the invention be embodied using more elements than depicted in the Figures, wherein functions carried out by one component in the embodiment provided are distributed over multiple components.

A person skilled in the art will readily appreciate that various parameters disclosed in the description may be modified and that various embodiments disclosed and/or claimed may be combined without departing from the scope of the invention.

## Claims

1. Bicycle stand device for storing a bicycle, the device comprising:
- A support frame;
- A storage platform connected to the support frame over a swivelling connection having a swivelling axis, allowing the storage platform to be moved between a storage position for storing the bicycle and a parking position for receiving the bicycle, the storage position being higher than the parking position; and
- A biasing element connected to the support frame at a proximal end of the biasing element and connected to the storage platform at a distal end of the biasing element, the biasing element being arranged for providing a biasing force for biasing the storage platform to the storage position if the storage platform is in the storage position;
Wherein the biasing element is connected to the support frame and the storage platform such that:
- Over a first trajectory of the movement of the storage platform from the storage position to the parking position the storage platform is biased to the storage position;
- Over a second trajectory of the movement of the storage platform from the storage position to the parking position the storage platform is biased to the parking position;
- In the parking position, the storage platform is biased to the parking position;
- wherein an angle Alpha of the biasing element with respect to the storage platform in the storage position is smaller than 10 degrees.

2. Device according to claim 1, wherein the first trajectory is longer than the second trajectory.

3. Device according to any of the preceding claims, wherein the frame comprises a support abutment and the storage platform comprises a platform abutment such that in the parking position, the support abutment abuts against the platform abutment, preferably wherein the support abutment is adjustable.

4. Device according to any of the preceding claims, wherein an angle Beta of the biasing element with respect to the storage platform in the parking position is smaller than 5 degrees, preferably smaller than 3 degrees.

5. Device according to any of the preceding claims, wherein a first dimension between a line perpendicular to the storage platform through the swivelling point to the support abutment is smaller than a second dimension between the line and the distal end of the biasing element.

6. Device according to any of the preceding claims, wherein the biasing element is connected to the frame and to the storage platform at the same side of the swivelling axis determined from a line through the swivelling axis perpendicular to the storage platform in the storage position.

7. Device according to any of the preceding claims, wherein a first length between a mounting position of the proximal end to the frame and the swivelling axis is smaller than a second length between the mounting position of the distal end and the swivelling axis.

8. Device according to any of the preceding claims, wherein:
- The storage platform is in the storage position in a substantially horizontal position and is in the parking position in a downwardly slanting position; and
- The biasing element comprises an elongated body which is substantially parallel to the storage platform throughout movement of the storage platform from the storage position to the parking position and throughout movement of the storage platform from the parking position to the storage position.

9. Device according to claim 8, wherein:
- The frame comprises a frame arm through which the swivelling axis extends and the storage platform comprises a platform arm through which the swivelling axis extends; and
- The biasing element is placed under an angle relative to the platform arm and is at a point between the first trajectory and the second trajectory parallel to the platform arm.

10. Device according to any of the preceding claims, wherein the biasing element is provided below the swivelling axis.

11. Device according to any of the preceding claims, wherein:
- The frame comprises a frame arm through which the swivelling axis extends and the storage platform comprises a platform arm through which the swivelling axis extends; and
- The proximal end is connected to the frame at a first distance from the frame arm and the distal end is connected to the storage platform at a second distance from the platform arm.

12. Device according to claim 11, wherein the first distance is larger than the second distance.

13. Device according to any of the preceding claims, wherein the biasing element is a gas spring.

14. Device according to any of the preceding claims, wherein the storage platform comprises a gutter for receiving at least one wheel of a bicycle, preferably wherein the gutter is translatably mounted to the storage platform.

15. Device according to any of the preceding claims, wherein, in use, the storage platform is connected to the frame at a height such that a further bicycle may be stored below the storage platform.
